# EUROPÄISCHE PATENTSCHRIFT

(11) **EP 3 740 351 B1**
(45) Veröffentlichungstag und Bekanntmachung des Hinweises auf die Patenterteilung: **06.08.2025**
(21) Anmeldenummer: 19700913.7
(22) Anmeldetag: 16.01.2019
(51) Int. Cl.: B25J 9/00, B25J 19/00

(54) **DELTA-ROBOTER MIT EINEM EINGABEMITTEL**
DELTA ROBOT HAVING AN INPUT MEANS
ROBOT DELTA POURVU D'UN MOYEN D'ENTRÉE

(30) Priorität: 19.01.2018 DE 102018200892
(43) Veröffentlichungstag der Anmeldung: 25.11.2020
(73) Patentinhaber: KUKA Deutschland GmbH, 86165 Augsburg (DE)
(72) Erfinder: HANDFEST, Alexander, 86568 Hollenbach (DE); KLEIN, Victor, 86156 Augsburg (DE)
(74) Vertreter: Oelke, Jochen
(86) Internationale Anmeldenummer: PCT/EP2019/051003
(87) Internationale Veröffentlichungsnummer: WO 2019/141707

(56) Entgegenhaltungen:
- EP-A1- 0 333 874
- EP-A1- 0 788 865
- WO-A1-2017/060539
- JP-A- 2017 100 225
- US-A1- 2017 173 792
- US-B2- 8 714 903

## Beschreibung

Die Erfindung betrifft einen Delta-Roboter, aufweisend eine Roboterbasis, einen im Raum positionierbaren Endeffektor-Träger und drei den Endeffektor-Träger mit der Roboterbasis verbindende Parallelogramm-Gelenksanordnungen, die ausgebildet sind, den Endeffektor-Träger unter Beibehaltung seiner Orientierung im Raum relativ zur Roboterbasis verstellbar zu verbinden, wobei jede Parallelogramm-Gelenksanordnung mittels eines Motors angetrieben verstellbar ist, um den Endeffektor-Träger automatisch zu bewegen, wobei jeder Motor mittels einer Bremse abbremsbar ist, um den Endeffektor-Träger automatisch anzuhalten und/oder den Endeffektor-Träger in seiner momentanen Position zu halten.

Aus der DE 699 30 009 T2 ist ein Deltaroboter bekannt, bei dem ein Positionieren eines beweglichen Elements in Bezug auf ein feststehendes Element stattfindet. Drei Antriebsmittel treiben jeweils ihre eigene Verbindungsvorrichtung an, die zwischen den festen und den beweglichen Elementen angeordnet ist. Die Verbindungsvorrichtungen können Stangen beinhalten, die in Mehrfachgelenksystemen angeordnet sind, wobei die Gelenke Kugelgelenke umfassen können.

Die Druckschrift US 2017/173792 A1 offenbart einen Delta-Roboter gemäß dem Oberbegriff des Anspruchs 1. Eingabemittel in der Nähe eines Endeffektors eines Roboters werden in den Druckschriften EP 0788865 A1 und EP 0333874 A1 gezeigt.

JP2017100225A offenbart ein Arbeitsgerät mit einem Endeffektor, der an einem beweglichen Teil befestigt ist, der sich über mehrere Verbindungsmechanismen bewegt, und zeigt ebenso ein Lehrverfahren für das Arbeitsgerät.

Aufgabe der Erfindung ist es, einen Delta-Roboter zu schaffen, der in einem Handfahrbetrieb auf einfache Weise verstellt werden kann.

Diese Aufgabe wird gelöst durch einen Delta-Roboter, mit den Merkmalen des Anspruchs 1.

Im Rahmen der Erfindung kann der Motor insbesondere von einem elektrischen Motor gebildet werden oder von einem elektrischen Antrieb gebildet werden, der einen elektrischen Motor und wenigstens ein Getriebe umfasst. Jeder Motor, insbesondere auch nicht-elektrische Motoren können im Rahmen der Erfindung eine Antriebseinheit aus Motor und Getriebe bilden. Jeder Motor oder jeder Antrieb, aufweisend einen Motor und ein Getriebe kann eine Antriebseinheit bilden, die unmittelbar auch eine Bremse aufweist. Die jeweils zugeordnete Bremse kann gegebenenfalls jedoch auch separat von der Antriebseinheit angeordnet sein, an einem beliebigen Ort innerhalb des jeweiligen Antriebstranges der den Motor mit der jeweils zugeordneten Parallelogramm-Gelenksanordnung antreibbar verbindet.

Jede Parallelogramm-Gelenksanordnung kann einen an der Roboterbasis schwenkbar gelagerten Hebel aufweisen, der mittels jeweils einem Motor automatisch um eine Schwenkachse geschwenkt werden kann. An einem distalen Ende des Hebels sind zwei voneinander beabstandete Lager angeordnet, an denen jeweils ein Parallelogrammstab mit seinem jeweiligen proximalen Endabschnitt gelenkig gelagert ist. Die beiden Parallelogrammstäbe erstrecken sich stets parallel zueinander und sind mittels ihrer distalen Endabschnitte an zwei voneinander beabstandeten Lagern an den Endeffektor-Träger gekoppelt und zwar derart, dass der Endeffektor-Träger aufgrund seiner An-koppelung an die Roboterbasis über die drei Parallelogramm-Gelenksanordnungen nur in den drei Raumrichtungen umpositionierbar, d.h. verschiebbar bzw. verstellbar ist und dabei seine drei Orientierungen im Raum jedoch stets beibehält. Im Falle einer plattenförmigen Roboterbasis und einem plattenförmigen Endeffektor-Träger bewegt sich der Endeffektor-Träger zur Roboterbasis stets parallel ausgerichtet im Raum. Dazu können insbesondere drei Parallelogramm-Gelenksanordnungen vorgesehen sein, die an der Roboterbasis jeweils um 120 Winkelgrad versetzt zueinander angeordnet sind. Insoweit sind die drei Parallelogramm-Gelenksanordnungen bzw. die an der Roboterbasis gelagerten Hebel jeweils um eine Schwenkachse mittels jeweils einem Motor automatisch schwenkbar gelagert, welche Schwenkachse um jeweils 120 Winkelgrad zur Schwenkachse der benachbarten Parallelogramm-Gelenksanordnung oder des benachbarten Hebels ausgerichtet ist. Entsprechende Parallelogramm-Gelenksanordnungen und insbesondere ein entsprechender beispielhafter Delta-Roboter ist bspw. in EP 0 250 470 B1 offenbart. Eines, mehrere oder alle Gelenke welche die Stäbe der Parallelogramm-Gelenksanordnungen ankoppeln, können als Kugelgelenke ausgebildet sein.

Der Delta-Roboter kann im Falle eines konkreten Ausführungsbeispiels eine Roboterbasis aufweisen, die eine Grundplatte umfasst, auf der drei um 120 Winkelgrad gleichmäßig über einen Umfang verteilt und versetzt zueinander angeordnete Drehlager angeordnet sind, die jeweils eine Drehachse aufweisen, die sich insbesondere horizontal erstreckt. An jedem dieser Drehlager ist ein Hebel schwenkbar gelagert. Der Hebel kann angetrieben durch jeweils einen zugeordneten, insbesondere elektrischen Motor auf und ab geschwenkt werden. Der jeweilige proximale Endabschnitt jeden Hebels ist insoweit um die Drehachse des jeweiligen Drehlagers schwenkbar an der Grundplatte gelagert. An jeweils einem distalen Endabschnitt des jeweiligen Hebels sind zwei Kugelköpfe in einem festen Abstand voneinander angeordnet. An jedem Kugelkopf ist ein Stab der jeweiligen Parallelogramm-Gelenksanordnung gelagert. Dazu weist jeder Stab einen proximalen Stabendabschnitt auf, der eine Kugelpfanne aufweist, die zusammen mit dem jeweils zugeordneten Kugelkopf des Hebels ein Kugelgelenk bildet. An seinem distalen Stabendabschnitt weist jeder Stab der jeweiligen Parallelogramm-Gelenksanordnung eine weitere Kugelpfanne auf. In diesen weiteren Kugelpfannen sind weitere Kugelköpfe gelagert, die ihrerseits fest mit dem Endeffektor-Träger verbunden sind. Jeweils zwei zueinander zugeordnete Kugelköpfe des Endeffektor-Trägers sind in einem festen Abstand zueinander angeordnet, um eine Parallelität der beiden Stäbe jeweils einer Parallelogramm-Gelenksanordnung zu gewährleisten.

Indem der Endeffektor-Träger wenigstens ein Eingabemittel aufweist, das steuerungstechnisch mit den Bremsen verbunden ist und das ausgebildet ist, in einem betätigten Schaltzustand des Eingabemittels die Bremsen zu lösen, derart, dass der Endeffektor-Träger manuell verstellbar ist, wird ein Delta-Roboter geschaffen, der in einem Handfahrbetrieb auf einfache Weise verstellt werden kann.

Durch die Positionierung des Eingabemittels, das ein Bremsenöffnungs-Taster sein kann, an dem Endeffektor-Träger des Delta-Roboters ist er immer für einen Bediener erreichbar. Bei Betätigung des Eingabemittels kann das vom Endeffektor gehaltene Bauteil unmittelbar in der Hand gehalten werden, welches man verschieben möchte, wobei gleichzeitig das Eingabemittel von Hand erreichbar ist. Somit kann der Roboter-Flansch, d.h. der Endeffektor-Träger einfach, intuitiv und präzise per Hand positioniert werden. Der Endeffektor-Träger kann auch als Parallelplatte bezeichnet werden.

Die Bremsen können als elektrisch zu betätigende Bremsen ausgebildet sein, das wenigstens eine Eingabemittel kann dabei ein elektrisch zu betätigendes Eingabemittel sein und das Eingabemittel kann mittels elektrischer Leitungen mit den Bremsen verbunden sein.

Das Eingabemittel kann beispielsweise als Taster, als Druckschalter oder als Schaltwippe ausgeführt sein.

Das wenigstens eine Eingabemittel kann mit den Bremsen unmittelbar elektrisch verbunden sein, insbesondere unter Umgehung einer Robotersteuerung des Delta-Roboters.

Die Bremsen der Motoren können mit der Robotersteuerung verbunden sein, derart, dass die Bremsen durch ein Steuerungssignal der Robotersteuerung wahlweise geöffnet oder geschlossen werden können, wobei das Eingabemittel mit der Robotersteuerung verbunden ist und die Robotersteuerung eingerichtet ist, in Abhängigkeit des Schaltzustandes des Eingabemittels die Bremsen zu öffnen oder zu schließen.

Die Motoren können jeweils einen elektrischen, insbesondere elektromagnetischen Aktor aufweisen, der jeweils ausgebildet ist, die Bremse des jeweiligen Motors zu betätigen und zwar derart, dass in einem bestromten Zustand des Aktors die Bremse geöffnet ist und in einem unbestromten Zustand des Aktors die Bremse geschlossen ist, und das Eingabemittel ausgebildet und eingerichtet ist, bei seiner Betätigung den Aktor zu bestromen, um die Bremse zu öffnen.

Ein bestromter Zustand des Aktors bedeutet in diesem Fall, dass der Aktor in diesem Zustand mit elektrischer Energie versorgt wird, wobei die elektrische Energie dabei den Aktor in einen betätigten Zustand hält, um die Bremse zu öffnen bzw. offen zu halten.

Ein unbestromter Zustand des Aktors bedeutet in diesem Fall, dass in diesem Zustand eine Versorgung des Aktors mit elektrischer Energie unterbrochen ist, wobei aufgrund der fehlenden Energieversorgung der Aktor die Bremse nicht mehr in einem betätigten Zustand des Aktors halten kann, in dem die Bremse geöffnet ist, wodurch der Aktor abfällt, d.h. der Aktor selbsttätig in einen anderen Zustand gelangt, in dem er die Bremse schließt. Der Aktor kann beispielsweise einen Hubmagneten umfassen.

Die Motoren können jeweils einen elektrischen, insbesondere elektromagnetischen Aktor aufweisen, der jeweils ausgebildet ist, die Bremse des jeweiligen Motors zu betätigen und zwar derart, dass in einem bestromten Zustand des Aktors die Bremse geschlossen ist und in einem unbestromten Zustand des Aktors die Bremse geöffnet ist, und das Eingabemittel ausgebildet und eingerichtet ist, bei seiner Betätigung die elektrische Stromversorgung zu dem Aktor zu unterbrechen, um die Bremse zu öffnen.

Ein bestromter Zustand des Aktors bedeutet in diesem Fall, dass der Aktor in diesem Zustand mit elektrischer Energie versorgt wird, wobei die elektrische Energie dabei den Aktor in einen betätigten Zustand hält, um die Bremse zu schließen bzw. geschlossen zu halten.

Ein unbestromter Zustand des Aktors bedeutet in diesem Fall, dass in diesem Zustand eine Versorgung des Aktors mit elektrischer Energie unterbrochen ist, wobei aufgrund der fehlenden Energieversorgung der Aktor die Bremse nicht mehr in einem betätigten Zustand des Aktors halten kann, in dem die Bremse geschlossen ist, wodurch der Aktor abfällt, d.h. der Aktor selbsttätig in einen anderen Zustand gelangt, in dem er die Bremse öffnet. Der Aktor kann beispielsweise einen Hubmagneten umfassen.

Der Endeffektor-Träger weist erfindungsgemäß ein Gehäuse mit einem hohlen Innenraum auf und das wenigstens eine Eingabemittel ist dabei innerhalb des hohlen Innenraums des Gehäuses des Endeffektor-Trägers elektrisch kontaktiert.

An das wenigstens eine Eingabemittel ist erfindungsgemäß eine elektrische Leitung angeschlossen, die über einen am Gehäuse des Endeffektor-Trägers ausgebildeten Leitungsdurchtritt hindurch aus dem Innenraum des Gehäuses nach außerhalb des Gehäuses des Endeffektor-Trägers herausgeführt ist. Die Leitung kann außerhalb des Gehäuses entlang einem der Parallelogrammstäbe entlang zu der Basis des Delta-Roboters geführt sein.

Der Endeffektor-Träger kann wenigstens zwei oder wenigstens drei Eingabemittel aufweisen und die mehreren Eingabemittel können mit einer Auswerteinrichtung des Delta-Roboters steuerungstechnisch verbunden sein, derart, dass in Abhängigkeit einer Betätigung oder Nicht-Betätigung der jeweiligen wenigstens zwei oder wenigstens drei Eingabemittel mehr als zwei Schaltzustände realisiert sind, um neben einem Ansteuern der Bremsen auch zusätzliche Steuerungszustände setzen zu können.

Der Endeffektor-Träger kann zwischen jeweils zwei Lagerabschnitten von benachbarten Parallelogramm-Gelenksanordnungen eine Bohrung aufweisen, insbesondere eine Gewindebohrung aufweisen, die ausgebildet ist, zum wahlweisen Befestigen eines Eingabemittels, einer Zugentlastungstülle oder eines Justageinstruments.

Durch die typische Anordnung von drei Armen des Delta-Roboters entstehen drei Bereiche oder Flächen an dem Gehäuse, welche mit Funktionen belegt werden können. Beispielsweise kann ein Bereich zur Anbindung der Kabel dienen und ein anderer Bereich kann zur Unterbringung eines Eingabemittels wie des Bremsenöffnungs-Tasters dienen. Mit entsprechend ausgebildeter Software können die Funktionen des Bremsenöffnungs-Tasters erweitert werden. Auch eine höhere Anzahl an Eingabemitteln, wie Taster ist möglich. Ein Teachen von einzelnen Punkten, Bewegungen oder ganzen Programmen ist generell in einem Handfahrbetrieb möglich.

Ein konkretes Ausführungsbeispiel der Erfindung ist in der nachfolgenden Figurenbeschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder auch in anderen Kombinationen der Merkmale betrachtet, allgemeine Merkmale der Erfindung darstellen.

Es zeigen:
Fig. 1 eine perspektivische Darstellung eines beispielhaften Delta-Roboters,
Fig. 2 eine vergrößerte Teilansicht des beispielhaften Delta-Roboters gemäß Fig. 1 im Bereich des Endeffektor-Trägers, der erfindungsgemäß wenigstens ein Eingabemittel aufweist, und
Fig.3 eine Schnittdarstellung durch den Endeffektor-Träger gemäß Fig. 2.

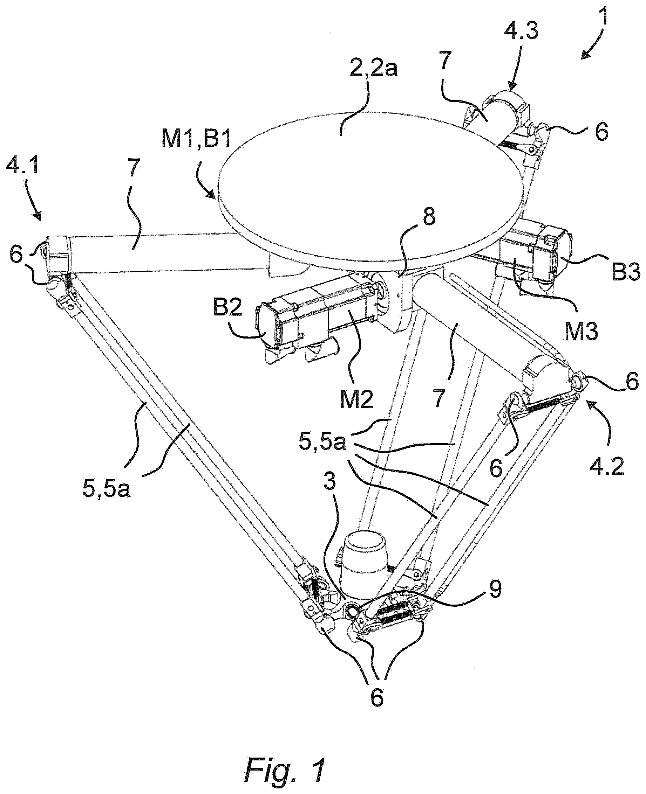

Die Fig. 1 zeigt einen Delta-Roboter 1, aufweisend eine Roboterbasis 2, einen im Raum positionierbaren Endeffektor-Träger 3 und drei den Endeffektor-Träger 3 mit der Roboterbasis 1 verbindende Parallelogramm-Gelenksanordnungen 4.1, 4.2, 4.3, die ausgebildet sind, den Endeffektor-Träger 3 unter Beibehaltung seiner Orientierung im Raum relativ zur Roboterbasis 2 verstellbar zu verbinden, wobei jede Parallelogramm-Gelenksanordnung 4.1, 4.2, 4.3 mittels eines Motors M1, M2, M3 angetrieben verstellbar ist, um den Endeffektor-Träger 3 automatisch zu bewegen, und die Parallelogramm-Gelenksanordnungen 4.1, 4.2, 4.3 Stäbe 5 aufweisen, die mittels Kugelgelenken 6 in die Gelenksstruktur des Delta-Roboters 1 integriert sind. Jeder der drei Motoren M1, M2, M3 weist eine Bremse B1, B2, B3 auf.

Jede Parallelogramm-Gelenksanordnung 4.1, 4.2, 4.3 kann demgemäß einen an der Roboterbasis 2 schwenkbar gelagerten Hebel 7 aufweisen, der mittels jeweils einem Motor M1, M2, M3 automatisch um eine Schwenkachse geschwenkt werden kann. An einem distalen Ende des jeweiligen Hebels 7 sind zwei voneinander beabstandete Lager angeordnet, an denen jeweils ein Parallelogrammstab 5a mit seinem jeweiligen proximalen Endabschnitt gelenkig gelagert ist. Die jeweils zwei Parallelogrammstäbe 5a erstrecken sich stets parallel zueinander und sind mittels ihrer distalen Endabschnitte an zwei voneinander beabstandeten Lagern an den Endeffektor-Träger 3 gekoppelt und zwar derart, dass der Endeffektor-Träger 3 aufgrund seiner Ankoppelung an die Roboterbasis 2 über die drei Parallelogramm-Gelenksanordnungen 4.1, 4.2, 4.3 nur in den drei Raumrichtungen umpositionierbar, d.h. verschiebbar bzw. verstellbar ist und dabei seine drei Orientierungen im Raum jedoch stets beibehält. Im Falle einer plattenförmigen Roboterbasis 2 und einem plattenförmigen Endeffektor-Träger 3 bewegt sich der Endeffektor-Träger 3 zur Roboterbasis 2 stets parallel ausgerichtet im Raum. Dazu können insbesondere drei Parallelogramm-Gelenksanordnungen 4.1, 4.2, 4.3 vorgesehen sein, die an der Roboterbasis 2 jeweils um 120 Winkelgrad versetzt zu-einander angeordnet sind. Insoweit sind die drei Parallelogramm-Gelenksanordnungen 4.1, 4.2, 4.3 bzw. die an der Roboterbasis 2 gelagerten Hebel 7 jeweils um eine Schwenkachse mittels jeweils einem Motor M1, M2, M3 automatisch schwenkbar gelagert, welche Schwenkachse um jeweils 120 Winkelgrad zur Schwenkachse der benachbarten Parallelogramm-Gelenksanordnung 4.1, 4.2, 4.3 oder des benachbarten Hebels 7 ausgerichtet ist.

Der Delta-Roboter 1 weist im Falle eines vorliegenden Ausführungsbeispiels eine Roboterbasis 2 auf, die eine Grundplatte 2a umfasst, auf der drei um 120 Winkelgrad gleichmäßig über einen Umfang verteilt und versetzt zueinander angeordnete Drehlager 8 angeordnet sind, die jeweils eine Drehachse aufweisen, die sich insbesondere horizontal erstreckt. An jedem dieser Drehlager 8 ist ein Hebel 7 schwenkbar gelagert. Der jeweilige Hebel 7 kann angetrieben durch jeweils einen zugeordneten, insbesondere elektrischen Motor M1, M2, M3 auf und ab geschwenkt werden. Der jeweilige proximale Endabschnitt jeden Hebels 7 ist insoweit um die Drehachse des jeweiligen Drehlagers 8 schwenkbar an der Grundplatte 2a gelagert. An jeweils einem distalen Endabschnitt des jeweiligen Hebels 7 sind zwei Kugelköpfe in einem festen Abstand voneinander an-geordnet. An jedem Kugelkopf ist ein Stab 5 der jeweiligen Parallelogramm-Gelenksanordnung 4.1, 4.2, 4.3 gelagert. Dazu weist jeder Stab 5 einen proximalen Stabendabschnitt auf, der eine Kugelpfanne aufweist, die zusammen mit dem jeweils zugeordneten Kugelkopf des Hebels 7 ein Kugelgelenk 6 bildet. An seinem distalen Stabendabschnitt weist jeder Stab 5 der jeweiligen Parallelogramm-Gelenksanordnung 4.1, 4.2, 4.3 eine weitere Kugelpfanne auf. In diesen weiteren Kugelpfannen sind weitere Kugelköpfe gelagert, die ihrerseits fest mit dem End-effektor-Träger 3 verbunden sind. Jeweils zwei zueinander zugeordnete Kugelköpfe des Endeffektor-Trägers 3 sind in einem festen Abstand zueinander angeordnet, um eine Parallelität der beiden Stäbe 5 jeweils einer Parallelogramm-Gelenksanordnung 4.1, 4.2, 4.3 zu gewährleisten.

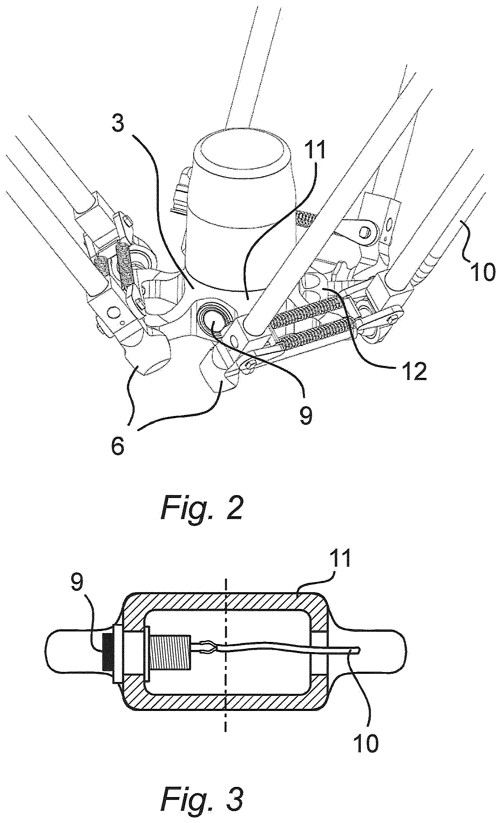

Der Endeffektor-Träger 3 weist, wie in Fig. 2 und Fig. 3 dargestellt, wenigstens ein Eingabemittel 9 auf, das steuerungstechnisch mit den Bremsen B1, B2, B3 verbunden ist und das ausgebildet ist, in einem betätigten Schaltzustand des Eingabemittels 9 die Bremsen B1, B2, B3 zu lösen, derart, dass der Endeffektor-Träger 3 manuell verstellbar ist.

Die Bremsen B1, B2, B3 sind im Falle des vorliegenden Ausführungsbeispiels als elektrisch zu betätigende Bremsen B1, B2, B3 ausgebildet, wobei das wenigstens eine Eingabemittel 9 ein elektrisch zu betätigendes Eingabemittel 9 ist und das Eingabemittel 9 mittels elektrischer Leitung 10 mit den Bremsen B1, B2, B3 verbunden ist.

Das wenigstens eine Eingabemittel 9 kann mit den Bremsen B1, B2, B3 unmittelbar elektrisch verbunden sein, insbesondere unter Umgehung einer Robotersteuerung des Delta-Roboters 1 oder die Bremsen B1, B2, B3 der Motoren M1, M2, M3 können mit der Robotersteuerung verbunden sein, derart, dass die Bremsen B1, B2, B3 durch ein Steuerungssignal der Robotersteuerung wahlweise geöffnet oder geschlossen werden können, wobei das Eingabemittel 9 mit der Robotersteuerung verbunden ist und die Robotersteuerung eingerichtet ist, in Abhängigkeit des Schaltzustandes des Eingabemittels 9 die Bremsen B1, B2, B3 zu öffnen oder zu schließen.

Der Endeffektor-Träger 3 weist im Falle eines vorliegenden Ausführungsbeispiels ein Gehäuse 11 mit einem hohlen Innenraum auf und das wenigstens eine Eingabemittel 9 ist dabei innerhalb des hohlen Innenraums des Gehäuses 11 des Endeffektor-Trägers 3 elektrisch kontaktiert.

An das wenigstens eine Eingabemittel 9 ist die elektrische Leitung 10 angeschlossen, die über einen am Gehäuse 11 des Endeffektor-Trägers 3 ausgebildeten Leitungsdurchtritt, der eine Zugentlastungstülle 12 umfasst, hindurch aus dem Innenraum des Gehäuses 11 nach außerhalb des Gehäuses 11 des Endeffektor-Trägers 3 herausgeführt.

Der Endeffektor-Träger 3 kann statt des dargestellten einzigen Eingabemittels 9 auch zwei oder wenigstens drei Eingabemittel aufweisen, wobei die mehreren Eingabemittel 9 mit einer Auswerteinrichtung des Delta-Roboters 1 steuerungstechnisch verbunden sein können, derart, dass in Abhängigkeit einer Betätigung oder Nicht-Betätigung der jeweiligen wenigstens zwei oder wenigstens drei Eingabemittel 9 mehr als zwei Schaltzustände realisiert sind, um neben einem Ansteuern der Bremsen B1, B2, B3 auch zusätzliche Steuerungszustände setzen zu können.

Der Endeffektor-Träger 3 weist zwischen jeweils zwei Lagerabschnitten von benachbarten Parallelogramm-Gelenksanordnungen 4.1, 4.2, 4.3 jeweils eine Bohrung auf, insbesondere eine Gewindebohrung, die ausgebildet ist, zum wahlweisen Befestigen eines Eingabemittels 9, der Zugentlastungstülle 12 oder eines nicht näher dargestellten Justageinstruments.

### Bezugszeichenliste

- 1: Delta-Roboter
- 2: Roboterbasis
- 2a: Grundplatte 2a
- 3: Endeffektor-Träger
- 4.1: Parallelogramm-Gelenksanordnung
- 4.2: Parallelogramm-Gelenksanordnung
- 4.3: Parallelogramm-Gelenksanordnung
- 5: Stab
- 6: Kugelgelenk
- 7: Hebel
- 8: Drehlager
- 9: Eingabemittel
- 10: elektrische Leitung
- 11: Gehäuse
- 12: Zugentlastungstülle
- B1: Bremse
- B2: Bremse
- B3: Bremse
- M1: Motor
- M2: Motor
- M3: Motor

## Patentansprüche

1. Delta-Roboter, aufweisend eine Roboterbasis (2), einen im Raum positionierbaren Endeffektor-Träger (3) und drei den Endeffektor-Träger (3) mit der Roboterbasis (2) verbindende Parallelogramm-Gelenksanordnungen (4.1, 4.2, 4.3), die ausgebildet sind, den Endeffektor-Träger (3) unter Beibehaltung seiner Orientierung im Raum relativ zur Roboterbasis (2) verstellbar zu verbinden, wobei jede Parallelogramm-Gelenksanordnung (4.1, 4.2, 4.3) mittels eines Motors (M1, M2, M3) angetrieben verstellbar ist, um den Endeffektor-Träger (3) automatisch zu bewegen, wobei jeder Motor (M1, M2, M3) mittels einer Bremse (B1, B2, B3) abbremsbar ist, um den Endeffektor-Träger (3) automatisch anzuhalten und/oder den Endeffektor-Träger (3) in seiner momentanen Position zu halten,
wobei der Endeffektor-Träger (3) wenigstens ein Eingabemittel (9) aufweist, das steuerungstechnisch mit den Bremsen (B1, B2, B3) verbunden ist und das ausgebildet ist, in einem betätigten Schaltzustand des Eingabemittels (9) die Bremsen (B1, B2, B3) zu lösen, derart, dass der Endeffektor-Träger (3) manuell verstellbar ist,
**dadurch gekennzeichnet, dass**
der Endeffektor-Träger (3) ein Gehäuse (11) mit einem hohlen Innenraum aufweist,
wobei das wenigstens eine Eingabemittel (9) innerhalb des hohlen Innenraums des Gehäuses (11) des Endeffektor-Trägers (3) elektrisch kontaktiert ist und wobei an das wenigstens eine Eingabemittel (9) eine elektrische Leitung (10) angeschlossen ist, die über einen am Gehäuse (11) des Endeffektor-Trägers (3) ausgebildeten Leitungsdurchtritt, der eine Zugentlastungstülle (12) umfasst, hindurch aus dem Innenraum des Gehäuses (11) nach außerhalb des Gehäuses (11) des Endeffektor-Trägers (3) herausgeführt ist.

2. Delta-Roboter nach Anspruch 1, wobei die Bremsen (B1, B2, B3) als elektrisch zu betätigende Bremsen (B1, B2, B3) ausgebildet sind, das wenigstens eine Eingabemittel (9) ein elektrisch zu betätigendes Eingabemittel (9) ist und das Eingabemittel (9) mittels elektrischer Leitung (10) mit den Bremsen (B1, B2, B3) verbunden ist.

3. Delta-Roboter nach Anspruch 1 oder 2, wobei das wenigstens eine Eingabemittel (9) mit den Bremsen (B1, B2, B3) unmittelbar elektrisch verbunden ist, insbesondere unter Umgehung einer Robotersteuerung des Delta-Roboters (1).

4. Delta-Roboter nach Anspruch 1 oder 2, wobei die Bremsen (B1, B2, B3) der Motoren (M1, M2, M3) mit der Robotersteuerung verbunden sind, derart, dass die Bremsen (B1, B2, B3) durch ein Steuerungssignal der Robotersteuerung wahlweise geöffnet oder geschlossen werden können, wobei das Eingabemittel (9) mit der Robotersteuerung verbunden ist und die Robotersteuerung eingerichtet ist, in Abhängigkeit des Schaltzustandes des Eingabemittels (9) die Bremsen (B1, B2, B3) zu öffnen oder zu schließen.

5. Delta-Roboter nach einem der Ansprüche 1 bis 4, wobei die Motoren (M1, M2, M3) jeweils einen elektrischen, insbesondere elektromagnetischen Aktor aufweisen, der jeweils ausgebildet ist, die Bremse (B1, B2, B3) des jeweiligen Motors (M1, M2, M3) zu betätigen und zwar derart, dass in einem bestromten Zustand des Aktors die Bremse (B1, B2, B3) geöffnet ist und in einem unbestromten Zustand des Aktors die Bremse (B1, B2, B3) geschlossen ist, und das Eingabemittel (9) ausgebildet und eingerichtet ist, bei seiner Betätigung den Aktor zu bestromen, um die Bremse (B1, B2, B3) zu öffnen.

6. Delta-Roboter nach einem der Ansprüche 1 bis 4, wobei die Motoren (M1, M2, M3) jeweils einen elektrischen, insbesondere elektromagnetischen Aktor aufweisen, der jeweils ausgebildet ist, die Bremse (B1, B2, B3) des jeweiligen Motors (M1, M2, M3) zu betätigen und zwar derart, dass in einem bestromten Zustand des Aktors die Bremse (B1, B2, B3) geschlossen ist und in einem unbestromten Zustand des Aktors die Bremse (B1, B2, B3) geöffnet ist, und das Eingabemittel (9) ausgebildet und eingerichtet ist, bei seiner Betätigung die elektrische Stromversorgung zu dem Aktor zu unterbrechen, um die Bremse (B1, B2, B3) zu öffnen.

7. Delta-Roboter nach einem der Ansprüche 1 bis 6, wobei der Endeffektor-Träger (3) wenigstens zwei oder wenigstens drei Eingabemittel (9) aufweist und die mehreren Eingabemittel (9) mit einer Auswerteinrichtung des Delta-Roboters (1) steuerungstechnisch verbunden sind, derart, dass in Abhängigkeit einer Betätigung oder Nicht-Betätigung der jeweiligen wenigstens zwei oder wenigstens drei Eingabemittel (9) mehr als zwei Schaltzustände realisiert sind, um neben einem Ansteuern der Bremsen (B1, B2, B3) auch zusätzliche Steuerungszustände setzen zu können.

8. Delta-Roboter nach einem der Ansprüche 1 bis 7, wobei der Endeffektor-Träger (3) zwischen jeweils zwei Lagerabschnitten von benachbarten Parallelogramm-Gelenksanordnungen (4.1, 4.2, 4.3) eine Bohrung aufweist, insbesondere eine Gewindebohrung aufweist, die ausgebildet ist, zum wahlweisen Befestigen eines Eingabemittels (9), der Zugentlastungstülle (12) oder eines Justageinstruments.

## Claims

1. Delta robot comprising a robot base (2), an end effector carrier (3) which can be positioned in space, and three parallelogram joint arrangements (4.1, 4.2, 4.3) which connect the end effector carrier (3) to the robot base (2) and are designed to connect the end effector carrier (3) adjustably relative to the rotor base (2) while maintaining its orientation in space, wherein each parallelogram joint arrangement (4.1, 4.2, 4.3) can be adjusted in a manner driven by means of a motor (M1, M2, M3) in order to automatically move the end effector carrier (3), wherein each motor (M1, M2, M3) can be braked by means of a brake (B1, B2, B3) in order to automatically stop the end effector carrier (3) and/or to hold the end effector carrier (3) in its current position,
wherein the end effector carrier (3) has at least one input means (9) which is connected in terms of control to the brakes (B1, B2, B3) and is designed to release the brakes (B1, B2, B3) in an actuated switching state of the input means (9) in such a way that the end effector carrier (3) is manually adjustable,
**characterized in that**
the end effector carrier (3) has a housing (11) with a hollow interior,
wherein the at least one input means (9) is electrically contacted within the hollow interior of the housing (11) of the end effector carrier (3) and wherein an electrical line (10) is connected to the at least one input means (9) and is guided via a line passage formed on the housing (11) of the end effector carrier (3), the line passage comprising a strain-relief grommet (12), out of the interior of the housing (11) to outside the housing (11) of the end effector carrier (3).

2. Delta robot according to Claim 1, wherein the brakes (B1, B2, B3) are designed as electrically actuated brakes (B1, B2, B3), the at least one input means (9) is an electrically actuated input means (9) and the input means (9) is connected to the brakes (B1, B2, B3) by means of the electrical line (10).

3. Delta robot according to Claim 1 or 2, wherein the at least one input means (9) is directly electrically connected to the brakes (B1, B2, B3), in particular bypassing a robot controller of the delta robot (1).

4. Delta robot according to Claim 1 or 2, wherein the brakes (B1, B2, B3) of the motors (M1, M2, M3) are connected to the robot controller in such a way that the brakes (B1, B2, B3) can be selectively opened or closed by a control signal of the robot controller, wherein the input means (9) is connected to the robot controller and the robot controller is configured to open or close the brakes (B1, B2, B3) depending on the switching state of the input means (9).

5. Delta robot according to any of Claims 1 to 4, wherein the motors (M1, M2, M3) each have an electrical, in particular electromagnetic, actuator, the actuators each being designed to actuate the brake (B1, B2, B3) of the respective motor (M1, M2, M3), specifically in such a way that the brake (B1, B2, B3) is open in an energized state of the actuator and the brake (B1, B2, B3) is closed in a de-energized state of the actuator, and the input means (9), when it is actuated, is designed and configured to energize the actuator in order to open the brake (B1, B2, B3).

6. Delta robot according to any of Claims 1 to 4, wherein the motors (M1, M2, M3) each have an electrical, in particular electromagnetic, actuator, the actuators each being designed to actuate the brake (B1, B2, B3) of the respective motor (M1, M2, M3), specifically in such a way that the brake (B1, B2, B3) is closed in an energized state of the actuator and the brake (B1, B2, B3) is open in a de-energized state of the actuator, and the input means (9), when it is actuated, is designed and configured to interrupt the electrical power supply to the actuator in order to open the brake (B1, B2, B3).

7. Delta robot according to any of Claims 1 to 6, wherein the end effector carrier (3) has at least two or at least three input means (9) and the plurality of input means (9) are connected in terms of control to an evaluation device of the delta robot (1) in such a way that, depending on actuation or non-actuation of the respective at least two or at least three input means (9), more than two switching states are implemented in order to be able to also set additional control states in addition to actuating the brakes (B1, B2, B3).

8. Delta robot according to any of Claims 1 to 7, wherein the end effector carrier (3) has a bore, in particular a threaded bore, between two bearing portions of adjacent parallelogram joint arrangements (4.1, 4.2, 4.3), the bore being designed to selectively fasten an input means (9), the strain-relief grommet (12) or an adjustment instrument.

## Revendications

1. Robot Delta, comportant une base de robot (2), un support d'effecteur terminal (3) pouvant être positionné dans l'espace et trois agencements articulés en parallélogrammes (4.1, 4.2, 4.3) raccordant le support d'effecteur terminal (3) à la base de robot (2), qui servent à raccorder le support d'effecteur terminal (3) de manière réglable par rapport à la base de robot (2) en conservant son orientation dans l'espace, chaque agencement articulé en parallélogramme (4.1, 4.2, 4.3) étant réglable par entraînement au moyen d'un moteur (M1, M2, M3) pour déplacer automatiquement le support d'effecteur terminal (3), chaque moteur (M1, M2, M3) pouvant être freiné au moyen d'un frein (B1, B2, B3) pour arrêter automatiquement le support d'effecteur terminal (3) et/ou maintenir le support d'effecteur terminal (3) dans sa position instantanée,
le support d'effecteur terminal (3) comportant au moins un moyen d'entrée (9) qui est connecté aux freins (B1, B2, B3) par technique de commande et qui sert à libérer les freins (B1, B2, B3) dans un état de commutation actionné du moyen d'entrée (9) de telle sorte que le support d'effecteur terminal (3) puisse être réglé manuellement,
**caractérisé en ce que**
le support d'effecteur terminal (3) comporte un boîtier (11) ayant un espace intérieur creux,
l'au moins un moyen d'entrée (9) étant mis en contact électrique à l'intérieur de l'espace intérieur creux du boîtier (11) du support d'effecteur terminal (3) et un câble électrique (10) étant raccordé à l'au moins un moyen d'entrée (9), ledit câble étant sorti de l'espace intérieur du boîtier (11) vers l'extérieur du boîtier (11) du support d'effecteur terminal (3) à travers un passage de câble réalisé sur le boîtier (11) du support d'effecteur terminal (3), lequel comprend un serre-câble anti-traction (12).

2. Robot Delta selon la revendication 1, dans lequel les freins (B1, B2, B3) sont conçus comme des freins à actionnement électrique (B1, B2, B3), l'au moins un moyen d'entrée (9) est un moyen d'entrée à actionnement électrique (9) et le moyen d'entrée (9) est connecté aux freins (B1, B2, B3) au moyen d'un câble électrique (10).

3. Robot Delta selon la revendication 1 ou 2, dans lequel l'au moins un moyen d'entrée (9) est connecté électriquement directement aux freins (B1, B2, B3), en particulier en contournant une commande de robot du robot Delta (1).

4. Robot Delta selon la revendication 1 ou 2, dans lequel les freins (B1, B2, B3) des moteurs (M1, M2, M3) sont connectés à la commande de robot, de telle sorte que les freins (B1, B2, B3) puissent être ouverts ou fermés sélectivement par un signal de commande de la commande de robot, le moyen d'entrée (9) étant connecté à la commande de robot et la commande de robot étant conçue pour ouvrir ou fermer les freins (B1, B2, B3) en fonction de l'état de commutation du moyen d'entrée (9).

5. Robot Delta selon l'une quelconque des revendications 1 à 4, dans lequel les moteurs (M1, M2, M3) comportent respectivement un actionneur électrique, en particulier électromagnétique, qui est conçu respectivement pour actionner le frein (B1, B2, B3) du moteur respectif (M1, M2, M3) et ce, de telle sorte que, dans un état alimenté de l'actionneur, le frein (B1, B2, B3) soit ouvert et que, dans un état non alimenté de l'actionneur, le frein (B1, B2, B3) soit fermé, et le moyen d'entrée (9) est conçu et agencé pour alimenter l'actionneur lors de son actionnement afin d'ouvrir le frein (B1, B2, B3).

6. Robot Delta selon l'une quelconque des revendications 1 à 4, dans lequel les moteurs (M1, M2, M3) comportent respectivement un actionneur électrique, en particulier électromagnétique, qui est conçu respectivement pour actionner le frein (B1, B2, B3) du moteur respectif (M1, M2, M3) et ce, de telle sorte que, dans un état alimenté de l'actionneur, le frein (B1, B2, B3) soit fermé et que, dans un état non alimenté de l'actionneur, le frein (B1, B2, B3) soit ouvert, et le moyen d'entrée (9) est conçu et agencé pour interrompre l'alimentation de l'actionneur lors de son actionnement afin d'ouvrir le frein (B1, B2, B3).

7. Robot Delta selon l'une quelconque des revendications 1 à 6, dans lequel le support d'effecteur terminal (3) comporte au moins deux ou au moins trois moyens d'entrée (9) et les multiples moyens d'entrée (9) sont connectés par technique de commande à une unité d'évaluation du robot Delta (1), de telle sorte que, en fonction d'un actionnement ou d'un non-actionnement des au moins deux ou au moins trois moyens d'entrée (9) respectifs, plus de deux états de commutation soient réalisés afin de pouvoir établir des états de commande supplémentaires en plus d'une commande des freins (B1, B2, B3).

8. Robot Delta selon l'une quelconque des revendications 1 à 7, dans lequel le support d'effecteur terminal (3) comporte, entre deux sections de palier respectives d'agencements articulés en parallélogrammes voisins (4.1, 4.2, 4.3), un alésage, en particulier un alésage fileté, qui est conçu pour la fixation sélective d'un moyen d'entrée (9), du serre-câble anti-traction (12) ou d'un instrument d'ajustement.
